# EUROPÄISCHE PATENTANMELDUNG

(11) **EP 0 669 198 A1**
(43) Veröffentlichungstag der Anmeldung: **30.08.1995**
(21) Anmeldenummer: 95100875.4
(22) Anmeldetag: 24.01.1995
(51) Int. Cl.: B29C 45/64

(54) **Spritzgiessvorrichtung**

(30) Priorität: 28.02.1994 CH 579/94
(71) Anmelder: Schoeller-Plast S.A., CH-1680 Romont (CH)
(72) Erfinder: Umiker, Hans, CH-8132 Egg (CH)
(74) Vertreter: EGLI-EUROPEAN PATENT ATTORNEYS

(57) **Zusammenfassung**

Eine Spritzgiessvorrichtung mit einem an einer feststehenden Grundplatte (2) befestigten Kern (3) und einer an einer beweglichen Grundplatte (4) befestigten Aussenform (7) weist zur Erhöhung der Schliesskraft beidseits der Aussenform (7) befestigte Magneteinrichtungen (12) auf mit Haftflächen (13), welche in der Schliessstellung von ferromagnetischem Material gebildete Ankerflächen (15) an Ankern (14), die an der feststehenden Grundplatte (2) befestigt sind, berühren.

Die Magneteinrichtungen (12), welche vorzugsweise aus schaltbaren Permanentmagneten bestehen, sind zwischen einem ersten Schaltzustand, in dem sie auf die Anker (14) eine anziehende Kraft ausüben und den sie in der Schliessstellung während des Einspritzens von Kunststoffmasse und einer anschliessenden Haltezeit einnehmen, und einem zweiten Schaltzustand, in dem sie nicht auf die Anker (14) einwirken und in den sie vor dem Oeffnen der Form gebracht werden, umschaltbar.

## Beschreibung

Die Erfindung betrifft eine Spritzgiessvorrichtung gemäss dem Oberbegriff des Anspruchs 1. Derartige Spritzgiessvorrichtungen werden zur Herstellung von verschiedensten Teilen und Gegenständen aus Kunststoff, z.B. von Behältern wie Flaschenkasten und Gemüsekästen und von Gefässen wie Eimern, aber auch von Fahrzeugbestandteilen, Gehäusen und Gehäuseteilen und vielem mehr eingesetzt.

Dabei wird der Hohlraum, den der mittels einer Formschliesseinrichtung, gewöhnlich eines Hydraulikzylinders, bewegliche Formteil in der Schliessstellung mit dem feststehenden Formteil bildet, unter verhältnismässig hohem Druck mit Spritzgiessmasse gefüllt und nach einer bestimmten Haltezeit, in welcher dieselbe sich verfestigt, der bewegliche Formteil vom feststehenden Formteil in eine Offenstellung zurückgezogen und das Spritzgiessteil aus der Form ausgestossen. Anschliessend wird der bewegliche Formteil auf den feststehenden Formteil zu bewegt, bis er wiederum die Schliessstellung erreicht, in der die Form für eine weitere Einspritzung bereit ist.

Bei der Herstellung von Spritzgiessteilen, besonders von grossflächigen Teilen mit verhältnismässig feinen Strukturen, z. B. Gemüsekörben, ist, insbesondere, wenn kurze Zykluszeiten erzielt werden sollen, ein hoher Einspritzdruck erforderlich, der einen beträchtlichen Druck auf den beweglichen Formteil zur Folge hat. Um diesen in der Schliessstellung festzuhalten, muss daher eine hohe Schliesskraft aufgebracht werden, was eine entsprechend leistungsfähige und gross dimensionierte Formschliesseinrichtung, wie sie für das Bewegen des beweglichen Formteils von der Schliess- in die Offenstellung und zurück allein nicht erforderlich wäre, notwendig macht. Dies verteuert und kompliziert sowohl die Vorrichtung als auch ihren Betrieb.

Hier soll die Erfindung Abhilfe schaffen. Die Erfindung, wie sie in den Ansprüchen gekennzeichnet ist, schafft eine Spritzgiessvorrichtung, bei welcher die zur Bewegung des beweglichen Formteils vorgesehene Einrichtung verhältnismässig klein dimensioniert sein kann - so, dass die aufbringbare Kraft eben zur Hin- und Herverschiebung des Formteils zwischen Schliess- und Offenstellung sicher ausreicht - und welche dennoch eine insbesondere auch für die Herstellung verhältnismässig grossflächiger und komplexer Spritzgiessteile ausreichende Schliesskraft zu erzeugen in der Lage ist.

Besondere Vorteile der Erfindung liegen darin, dass die Spritzgiessvorrichtung und insbesondere der bewegliche Teil derselben verhältnismässig leicht gebaut sein kann, da erforderliche grössere Kräfte in unmittelbarer Nähe der Formteile, an denen sie benötigt werden, angreifen und nicht über andere Teile auf sie übertragen werden müssen. Zusammen mit den stark verminderten Anforderungen an die Formschliesseinrichtung ermöglicht dies eine leichtere Bauweise der Spritzgiessvorrichtung, was Materialkosten einspart, aber auch die Bedienung erleichtert und den Betrieb verbilligt. Die Spritzgiessvorrichtung kann auch flexibel an die jeweiligen Anforderungen anpassbar sein, indem sie so gestaltet ist, dass die zur Erzeugung oder Erhöhung der Schliesskraft verwendeten Magneteinrichtungen an die Formteile angepasst montierbar und leicht abnehmbar sind. Auch die Aufrüstung bestehender herkömmlicher Spritzgiessvorrichtungen ist in den meisten Fällen möglich, was eine Anpassung derselben an höhere Schliesskraft erfordernde Einsätze, welche sonst den Kauf einer grösseren Maschine erfordern würden, eröffnet.

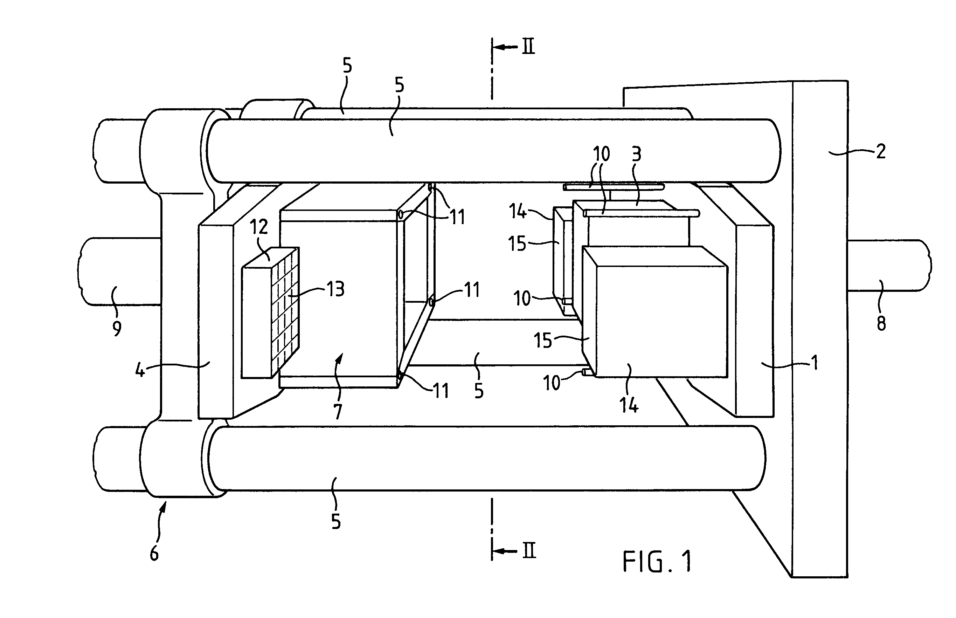

Im folgenden wird die Erfindung anhand von Zeichnungen, welche nur ein Ausführungsbeispiel darstellen, näher erläutert. Es zeigen
Fig. 1 eine perspektivische Seitenansicht einer erfindungsgemässen Spritzgiessvorrichtung und

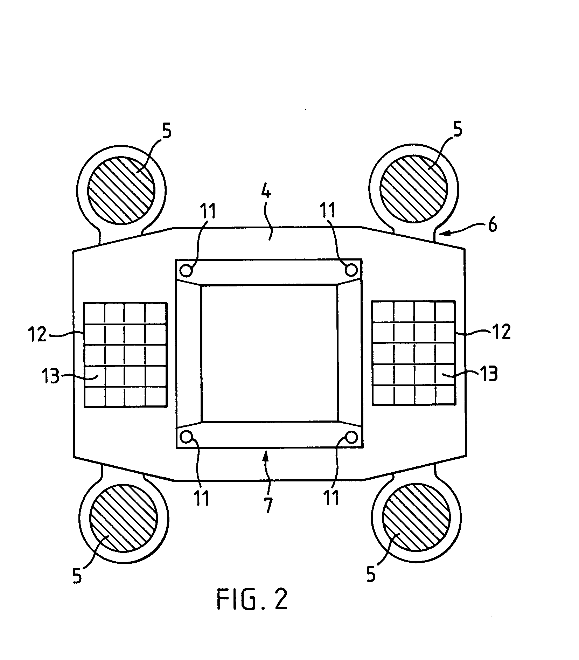

Fig. 2 einen Schnitt längs II - II in Fig. 1.

An einer feststehenden Grundplatte 1, welche an einer Basis 2 verankert ist, ist ein Kern 3 befestigt, welcher im wesentlichen den feststehenden Formteil einer Spritzgiessform bildet. In ähnlicher Weise ist an einer beweglichen Gundplatte 4, welche an einem längs vier Holmen 5 verschieblichen Schlitten 6 verankert ist, eine Aussenform 7 mit vier Backen befestigt, welche den beweglichen Formteil der Spritzgiessform bildet. An der Rückseite der Basis 2 schliesst ein Rohr 8 zur Zuführung von Spritzgiessmasse an, welche mit einer Oeffnung im Kern 3 verbunden ist. Der Schlitten 6 ist von einem Hydraulikzylinder 9 zwischen der Schliessstellung und der in den Figuren dargestellten Offenstellung hin- und herbewegbar. Zur Führung der Aussenform 7 sind neben den Ecken des Kerns 3 an der feststehenden Grundplatte 1 Führungsstangen 10 angebracht, welche in der Schliessstellung von entsprechenden Oeffnungen 11 in den oberen und unteren Backen der Aussenform 7 aufgenommen werden und sicherstellen, dass dieselbe relativ zum Kern 3 präzise positioniert ist.

Die Aussenform 7 ist beidseits von Magneteinrichtungen 12 flankiert, welche an der beweglichen Grundplatte 4 montiert sind. Sie weisen ebene Haftflächen 13 auf, die senkrecht zu den Holmen 5, längs welchen der Schlitten 6 bewegbar ist, gegen die feststehende Grundplatte 2 gerichtet sind. An dieser sind nun, den Magneteinrichtungen 12 genau gegenüber, Anker 14 montiert, welche den Haftflächen 13 zu denselben parallele, von ferromagnetischem Material gebildete Ankerflächen 15 zuwenden. In der Länge sind die Anker 14 so dimensioniert, dass in der Schliessstellung die Haftflächen 13 die Ankerflächen 15 berühren.

Für die Ausbildung der Magneteinrichtungen 12 gibt es verschiedene Möglichkeiten. Sie müssen in jedem Fall zwischen zwei Schaltzuständen umschaltbar sein, wobei sie im ersten Schaltzustand in der Schliessstellung eine hohe Anziehungskraft auf die Anker 14 ausüben, während im zweiten Schaltzustand jeweils keine oder höchstens eine geringe Residualkraft zwischen einer Magneteinrichtung 12 und dem ihr gegenüberliegenden Anker 14 wirksam ist. Sie können etwa aus einem oder mehreren Elektromagneten bestehen oder aus einer Kombination von Elektromagneten und Permanentmagneten, deren Felder sich je nach Schaltzustand verstärkend oder abschwächend überlagern.

Bevorzugt werden jedoch Magneteinrichtungen 12, die schaltbare Permanentmagnete enthalten oder ganz aus solchen bestehen. Derartige schaltbare Permanentmagnete weisen zwei stabile Zustände auf, einen ersten, in dem sie an einer Haftfläche ein hohes Magnetfeld und dementsprechend eine hohe Anziehungskraft auf ferromagnetische Gegenstände erzeugen und einem zweiten, in dem sie an der Haftfläche praktisch kein Magnetfeld und damit auch keine Anziehungskraft erzeugen und zwischen denen sie mittels durch Wicklungen geleiteter Stromstösse hin- und hergeschaltet werden können. Sie eignen sich für die Magneteinrichtungen 12 erfindungsgemässer Spritzgiessvorrichtungen besonders gut, da sie bei geringem Energieverbrauch in der Lage sind, hohe Kräfte zu erzeugen. Schaltbare Permanentmagnete der beschriebenen Art können beispielsweise bei Technomagnete S.p.A., Via Nerviano, 31, 1-20020 Lainate (Mi) bezogen werden und sind in verschiedenen Prospekten dieser Firma, z. B. "PLATEAUX MA-GNETIQUES ELECTROPERMANENTS QUADRI-SYSTEME serie QS" näher beschrieben. Sie können natürlich nach Bedarf durch gewöhnliche Permanentmagnete und Elektromagnete ergänzt werden.

Beim Betrieb der in den Figuren dargestellten Spritzgiessvorrichtung werden nach dem Schliessen der Form die beiden Magneteinrichtungen 12 in den ersten Schaltzustand gebracht, in welchem sie eine hohe anziehende Kraft auf die jeweils gegenüberliegenden Anker 14 ausüben, sodass feststehende und bewegliche Formteile fest aneinander gepresst werden. Anschliessend wird Kunststoffmasse unter Druck in den zwischen den Formteilen gebildeten Hohlraum eingespritzt. Nach einer Haltezeit, in welcher sich die Spritzgiessmasse verfestigt, werden die Magneteinrichtungen 12 in den zweiten Schaltzustand gebracht, in dem sie auf die Anker 14 keine Kraft ausüben. Anschliessend wird der Schlitten 6 zurückgezogen, wobei das Spritzgiessteil in der Aussenform 7 verbleibt, aus der es, sobald dieselbe die Offenstellung erreicht hat, nach Spreizen der Backen mittels eines Ausstossers (nicht dargestellt) ausgestossen wird.

Die Erfindung kann natürlich auf viele Weisen ausgestaltet und abgewandelt werden. Die Magneteinrichtungen 12 und die Anker 14 können jeweils aus festen, mit den Grundplatten verschraubbaren Moduln bestehen, die auf denselben nahezu beliebig positionierbar sind. Die Grundplatten können dazu mit einem Raster von Gewindebohrungen versehen sein. Die Magneteinrichtungen können wie beschrieben seitlich, aber auch - alternativ oder zusätzlich - etwa oberhalb und unterhalb der Formteile angebracht sein. Es ist natürlich auch möglich, sie direkt an einem der Formteile zu montieren, z. B. an Frontflächen der Backen, welche die Aussenform 7 bilden. In diesem Fall wären keine separaten Anker erforderlich, da deren Rolle von Teilen der feststehenden Grundplatte 2 oder des Kerns 3 übernommen würde. Dass Magneteinrichtungen und Anker dem feststehenden Formteil und dem beweglichen Formteil auch anders als hier beschrieben zugeordnet sein können, liegt auf der Hand.

## Patentansprüche

1. Spritzgiessvorrichtung mit einem feststehenden Formteil und einem zwischen einer Schliessstellung und einer Offenstellung verschieblichen beweglichen Formteil, welcher in der Schliessstellung mit dem feststehenden Formteil einen mit Spritzgiessmasse füllbaren Hohlraum umschliesst, dadurch gekennzeichnet, dass der bewegliche Formteil oder der feststehende Formteil mit mindestens einer Magneteinrichtung (12) verbunden ist, die jeweils zwischen einem ersten Schaltzustand, in welchem sie in der Schliessstellung auf einen mit dem feststehenden Formteil bzw. mit dem beweglichen Formteil verbundenen Anker (14) eine anziehende Kraft ausübt und einem zweiten Schaltzustand, in dem sie auf den besagten Anker (14) höchstens eine geringe Residualkraft ausübt, umschaltbar ist.

2. Spritzgiessvorrichtung nach Anspruch 1, dadurch gekennzeichnet, dass die mindestens eine Magneteinrichtung (12) im zweiten Schaltzustand auf den Anker (14) keine Kraft ausübt.

3. Spritzgiessvorrichtung nach Anspruch 1 oder 2, dadurch gekennzeichnet, dass die mindestens eine Magneteinrichtung (12) mindestens einen Permanentmagneten umfasst.

4. Spritzgiessvorrichtung nach Anspruch 3, dadurch gekennzeichnet, dass der mindestens eine Permanentmagnet elektrisch derart umschaltbar ist, dass er im ersten Schaltzustand der Magneteinrichtung (12) eine anziehende Kraft auf den Anker, mit dem dieselbe wechselwirkt, ausübt, im zweiten Schaltzustand derselben jedoch nicht.

5. Spritzgiessvorrichtung nach einem der Ansprüche 1 bis 4, dadurch gekennzeichnet, dass die mindestens eine Magneteinrichtung (12) einen Elektromagneten umfasst.

6. Spritzgiessvorrichtung nach einem der Ansprüche 1 bis 5, dadurch gekennzeichnet, dass der bewegliche Formteil oder der feststehende Formteil jeweils zwischen mindestens zwei Magneteinrichtungen (12) oder Ankern (14), mit welchen er verbunden ist, angeordnet ist.

7. Spritzgiessvorrichtung nach einem der Ansprüche 1 bis 6, dadurch gekennzeichnet,dass die Magneteinrichtungen (12) abnehmbar mit dem beweglichen Formteil oder dem feststehenden Formteil verbunden sind.

8. Spritzgiessvorrichtung nach einem der Ansprüche 1 bis 7, dadurch gekennzeichnet, dass der bewegliche Formteil sowie die mindestens eine mit demselben verbundene Magneteinrichtung (12) oder der mindestens eine mit demselben verbundene Anker auf einem mittels einer Formschliesseinrichtung (9) längs Holmen (5) verschiebbaren Schlitten (6) befestigt sind.

9. Spritzgiessvorrichtung nach einem der Ansprüche 1 bis 8, dadurch gekennzeichnet, dass die mindestens eine Magneteinrichtung eine zur Bewegungsrichtung des beweglichen Formteils senkrechte Haftfläche (13) aufweist, welche in der Schliessstellung eine zu ihr parallele Ankerfläche (15) berührt.

10. Spritzgiessvorrichtung nach einem der Ansprüche 1 bis 9, dadurch gekennzeichnet, dass der bewegliche Formteil eine Aussenform (7) mit spreizbaren Backen und der feststehende Formteil ein Kern (3) ist.
